# DEMANDE DE BREVET EUROPEEN

(11) **EP 2 679 834 A1**
(43) Date de publication de la demande: **01.01.2014**
(21) Numéro de dépôt: 13305803.2
(22) Date de dépôt: 14.06.2013
(51) Int. Cl.: F16B 15/08, E04D 3/36, E04D 5/14

(54) **Bande de pièces de fixation**

(30) Priorité: 28.06.2012 FR 1256187
(71) Demandeur: Ateliers LR Etanco, 78230 Le Pecq (FR)
(72) Inventeur: Doreau, Damien, 78670 Villennes Sur Seine (FR); Leroy, Alain, 78820 Juziers (FR)
(74) Mandataire: Mazabraud, Xavier

(57) **Abrégé**

L'invention concerne une bande (10) comportant une pluralité de pièces de fixation (30a, 30b, 30c), chaque pièce de fixation comportant un fût (31) et une tête (32) à une extrémité du fût, dans laquelle lesdites pièces de fixation sont assemblées par au moins un lien souple (20a, 20b) fixé de façon irréversible à chaque pièce de fixation.

Chaque lien souple (20a, 20b) est avantageusement fixé à la tête (32) de chaque pièce de fixation (30a, 30b, 30c) par soudage aux ultra-sons.

## Description

L'invention se situe dans le domaine des pièces de fixation d'isolation thermique en toiture. Elle porte sur une présentation en bande de ces pièces en vue de faciliter leur pose par une machine de pose, mais également sur un procédé de fabrication de cette bande et sur un procédé de pose de pièces de fixation présentées en bande.

Des pièces de fixation sur une structure support de panneaux isolants surmontés d'une membrane d'étanchéité, par exemple en vue de réaliser l'isolation thermique et l'étanchéité d'un toit, sont connues, voir par exemple FR 2 920 844.

Ces pièces de fixation sont généralement en deux parties, une tête de retenue aplatie, ronde ou de forme oblongue, et un fût de forme allongée qui s'étend d'un côté de la tête. Le fût est creux et destiné à recevoir une vis métallique de fixation, la vis étant retenue à l'intérieur du fût par sa tête. Ceci présente l'avantage de limiter la longueur de la vis, mais également de réaliser une rupture de pont thermique car la pièce de fixation est en matériau non métallique, par exemple en matière plastique moulée. La pose de la membrane d'étanchéité ne doit présenter aucun défaut aussi léger soit-il, car la moindre fuite peut avoir à la longue des effets catastrophiques allant jusqu'au remplacement complet de la membrane et de la couche d'isolation, qui est une opération très onéreuse. En utilisation, la vis est souvent pré-montée à l'intérieur du fût.

Des machines de pose ont été développées en vue de faciliter la pose des pièces de fixation et de garantir la qualité de la pose, voir par exemple FR 2 796 872 déposé par la Demanderesse. Ces machines comportent un magasin dans lequel des pièces de fixation sont stockées de façon ordonnée, un moyen pour saisir une pièce de fixation, une presse pour la faire pénétrer dans la membrane et le matériau isolant, et un moyen de vissage pour actionner la vis qui lui est associée.

Les pièces de fixation se présentent généralement sous la forme d'une bande pour être introduites dans le magasin de la machine de pose. Plusieurs modes de réalisation sont connus. Les pièces de fixation peuvent par exemple être fixées sur un lien souple de façon détachable ; la bande est introduite dans le magasin, puis le lien est détaché des pièces de fixation, les pièces de fixation n'étant alors plus solidaires. Dans le document FR 2 872 796, les pièces de fixation sont retenues dans des encoches ménagées en bordure d'une bande de support souple. Dans les documents EP 1 175 567 et DE 40 17 133, les pièces de fixation sont retenues par des liens souples fixés sous leur tête. Ces modes de réalisation présentent deux inconvénients :
- la bande ou le lien souple ne sert qu'à faciliter l'introduction des pièces de fixation dans le magasin, il/elle est enlevé(e) ensuite et constitue donc un déchet qu'il faut gérer,
- les pièces de fixation ne sont plus maintenues à distance les unes des autres une fois dans le magasin, ce qui peut poser des problèmes dus au chevauchement d'une pièce sur l'autre.

Dans un autre mode de réalisation, les pièces de fixation sont retenues les unes aux autres grâce à une déformation de la périphérie de leur tête (voir DE 94 11 222) ou par une « carotte » perdable. Ce lien est conçu pour être souple et facilement sectionné au moment de la pose. Ce mode de réalisation présente les inconvénients suivants :
- la bande de pièces de fixation doit être moulée dans son ensemble et nécessite donc une machine différente de celle prévue pour les pièces de fixation seules,
- de ce fait la taille de la bande est limitée.

L'invention vise à résoudre ces problèmes. A cet effet, elle propose une bande comportant une pluralité de pièces de fixation, chaque pièce de fixation comportant un fût et une tête à une extrémité du fût, dans laquelle les pièces de fixation peuvent être assemblées par au moins un lien souple fixé de façon irréversible à chaque pièce de fixation.

L'invention se distingue des réalisations antérieures en ce que les pièces de fixation sont fabriquées individuellement puis assemblées entre elles par au moins un lien souple pour former une bande, et en ce que ce lien est fixé de façon irréversible aux pièces de fixation. Ce lien n'est donc pas le résultat d'un moulage de la bande, il existe dans le procédé de fabrication de la bande une étape de fixation du lien souple sur les pièces de fixation. Il existe par ailleurs une étape de sectionnement de ce lien souple dans le procédé de pose des pièces de fixation.

Les avantages sont nombreux :
- la bande ne nécessite pas une machine de fabrication spécifique, elle est constituée à partir de pièces de fixation individuelles fabriquées par ailleurs et d'un rouleau de lien souple,
- la longueur de la bande est facilement adaptable au magasin de la machine, en la sectionnant à la longueur du magasin,
- pour autant que le lien souple présente une rigidité suffisante, les pièces de fixation sont maintenues à distance les unes des autres dans le magasin,
- il n'y a pas de déchet à gérer,
- lorsque les têtes des pièces de fixation sont oblongues, le lien souple les maintient orientées l'une par rapport à l'autre.

Compte tenu de leur faible épaisseur, le fait que des fragments de lien souple subsistent sur les pièces de fixation après sectionnement au moment de la pose de la membrane d'étanchéité par-dessus les pièces de fixation ne constitue pas un inconvénient.

Par fixation irréversible, on entend d'une part que le lien souple résiste à des efforts normaux de traction et de flexion, notamment aux efforts qui résultent des opérations de manutention de la bande, un effort excessif pouvant aboutir à la rupture du lien avant sa séparation de la pièce de fixation, d'autre part qu'il existe une étape de sectionnement du lien souple au moment de la pose des pièces de fixation car les pièces de fixation sont plus rapprochées sur la bande que lorsqu'elles seront posées sur la membrane d'étanchéité.

Avantageusement, l'au moins un lien souple peut être fixé par collage ou soudage.

Le soudage est préféré, notamment le soudage par ultra-sons, car, contrairement au collage, il n'introduit pas de matière nouvelle dans cette fixation, matière qui serait susceptible de migrer dans la membrane d'étanchéité et d'affecter ses propriétés.

Avantageusement, la bande de fixation peut comporter deux liens souples sensiblement parallèles.

De cette façon, elle conserve une certaine résistance à la flexion transversale.

Dans un autre mode de réalisation, la bande de fixation peut comporter un seul lien souple. Dans ce cas, le lien souple obture avantageusement le canal de chaque pièce de fixation, ce qui évite l'entrée de corps étrangers dans ce canal. La panne de l'outil de vissage perce facilement le fragment de lien souple qui subsiste sur la tête de la pièce de fixation après sectionnement.

Avantageusement, la matière dudit au moins un lien souple est de même nature que celle de chaque pièce de fixation, notamment un polymère thermoplastique, et en ce qu'ils sont fixés par soudage.

De cette façon, les liens souples, fixés de façon irréversible sur les pièces de fixation, ne créent pas de contrainte supplémentaire de recyclage qui serait due à l'utilisation de matières différentes dans les pièces de fixation. De plus, l'opération de soudage en est facilitée. La matière peut être par exemple du polyamide ou du polypropylène.

L'invention porte également sur un procédé de fabrication d'une bande de pièces de fixation, pouvant comporter l'étape consistant à :
- assembler de façon irréversible chaque pièce de fixation à au moins un lien souple.

Le lien souple est par exemple fourni sous forme de rouleau et les pièces de fixation sont assemblées de façon alignée le long d'au moins un lien souple.

L'invention porte également sur un procédé de pose de pièces de fixation présentées en une bande, pouvant comporter les étapes consistant à :
- introduire la bande de pièces de fixation dans le magasin d'une machine de pose,
- sélectionner une pièce de fixation prise dans ladite bande,
- sectionner ledit au moins un lien souple reliant ladite pièce de fixation à une pièce de fixation adjacente de ladite bande.

Cette étape de sectionnement est nécessaire quand les pièces de fixation sont plus espacées lorsqu'elles sont posées que lorsqu'elles sont réunies en une bande, ce qui est généralement le cas. Elle intervient avantageusement avant la pose de la pièce de fixation.

Des modes de réalisation et des variantes seront décrits ci-après, à titre d'exemples non limitatifs, avec référence aux dessins annexés dans lesquels :
Les figures 1A et 1B représentent schématiquement en perspective une bande de pièces de fixation comportant trois pièces de fixation,
Les figures 2A et 2B représentent vues de dessus des têtes de pièces de fixation reliées par deux liens souples,
La figure 3 représente vues de dessus des têtes de pièces de fixation reliées par un seul lien souple.

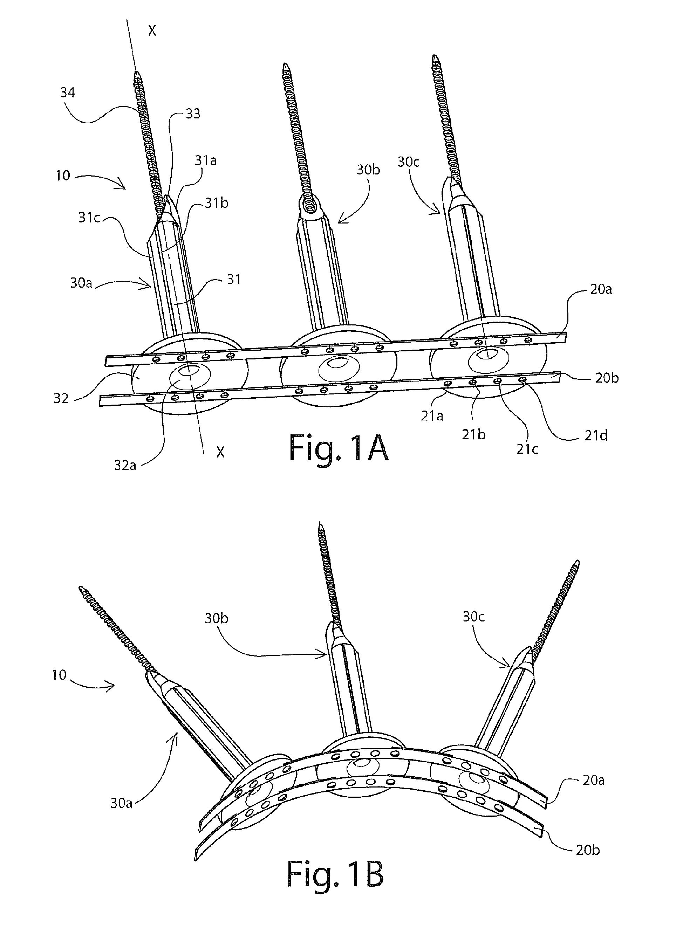

Les figures 1A et 1B illustrent une bande 10 comportant trois pièces de fixation 30a, 30b, 30c, reliées par deux liens souples 20a, 20b. Ces pièces de fixation, d'un type connu, comportant chacune un fût 31 et, à une première extrémité, une tête 32, ici une tête circulaire. Chaque fût comporte cinq nervures dont trois 31a, 31b, 31c sont visibles. Chaque fût est creux et débouche sur une ouverture 32a ménagée sur la tête 32. La seconde extrémité du fût comporte une pointe 33 destinée à percer une membrane d'isolation et un matériau isolant sous-jacent. Une vis 34 est maintenue par sa tête dans le fût 31 grâce à un dispositif anti-retour. Une portion de la tige de la vis 34 et sa pointe s'étendent au-delà de la pointe 33 du fût. La vis 34 est libre en rotation à l'intérieur du fût 31.

Les deux liens souples 20a, 20b se présentent sous la forme de rubans plats de section constante. Ils sont fixés sur les têtes 32 des pièces de fixation, sur la face de la tête située à l'opposé du fût 31, définie comme étant la face supérieure des pièces de fixation, de part et d'autre de l'axe X-X du fût. Ils pourraient être fixés sur la face à partir de laquelle s'étend le fût, définie comme étant la face inférieure, mais la fixation sur la face supérieure est préférée car elle offre plus de liberté aux pièces de fixation dans un mouvement de courbure de la bande 10 dans lequel les pointes 33 des pièces de fixation s'écartent, comme il est visible sur la figure 1B. Un tel mouvement de courbure de la bande est généralement nécessaire dans les machines de pose.

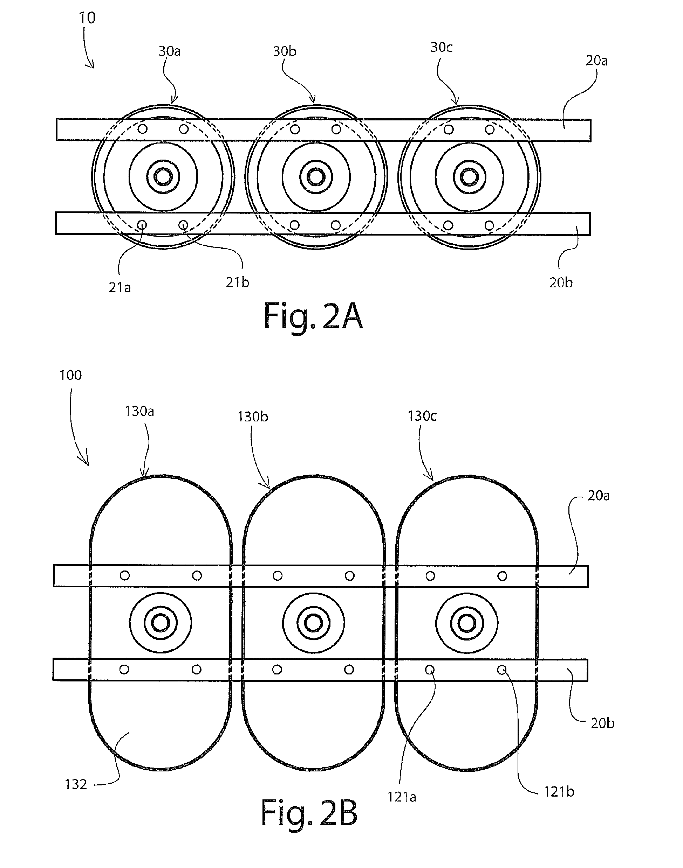

Chaque lien souple est fixé sur la face supérieure de la tête 32 par au moins un point de soudure, quatre points de soudure 21a, 21b, 21c, 21d dans l'exemple illustré en figure 1A, deux points de soudure 21a, 21b, 121a, 121b dans l'exemple illustré en figures 2A et 2B. On utilise de préférence un procédé de soudure par ultra-sons. Dans les exemples décrits plus haut, les points de soudure sont disposés longitudinalement le long de chaque lien souple et les parties masquées sont représentées en traits interrompus.

Comme il est visible sur les figures, les pièces de fixation 30a, 30b, 30c, 130a, 130b, 130c sont avantageusement réparties de façon équidistante dans la bande 10, 100.

Dans l'exemple illustré en figure 2A et pour des têtes circulaires 32 d'un diamètre de 40 mm, la largeur des liens souples est comprise entre 2 et 20 mm, par exemple environ 6 mm, et leur épaisseur d'environ 0,6 mm, soit une section d'environ 3,6 mm² sans que ceci soit considéré comme limitatif. L'important est que les liens souples présentent une rigidité suffisante pour, par exemple, que la bande soit facilement manipulable et que les pièces de fixation se maintiennent à distance l'une de l'autre dans la partie verticale du magasin de la machine de pose.

Les liens souples ne sont pas élastiques, ce qui confère à la bande une certaine résistance à la torsion autour d'un axe orthogonal au plan des liens souples 20a, 20b lorsque ceux-ci sont dans une position coplanaire.

Ils sont avantageusement constitués de la même matière que les pièces de fixation, de façon à permettre le soudage par ultra-sons, par exemple un polypropylène ou un polyamide.

L'un des avantages de la bande selon l'invention, illustré en figure 2B, est que, lorsque la tête 132 des pièces de fixation n'est pas circulaire mais oblongue, donc possédant une direction d'allongement, elles sont maintenues orientées et parallèles entre elles par les liens souples 20a, 20b du fait notamment de la non élasticité des liens.

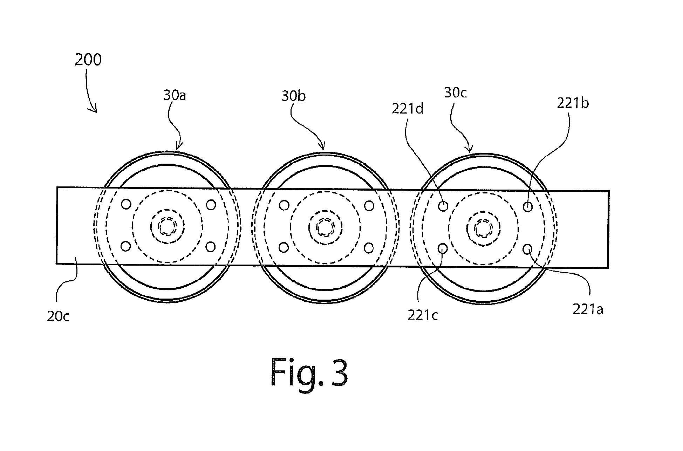

La figure 3 illustre une variante de bande 200 de pièces de fixation ne comportant qu'un seul lien souple 20c. Celui-ci se positionne avantageusement au-dessus de l'ouverture du canal de chaque pièce de fixation. Il est plus large que dans la variante comportant deux liens souples, une largeur comprise entre 5 et 30 mm, par exemple 15 mm.

Le lien souple étant plus large que dans les exemples décrits plus haut, les points de fixation 221a, 221b, 221c, 221d peuvent être disposés deux à deux transversalement par rapport au lien souple 20c.

## Revendications

1. Bande (10, 100) comportant une pluralité de pièces de fixation (30a, 30b, 30c, 130a, 130b, 130c), chaque pièce de fixation comportant un fût (31) et une tête (32) à une extrémité du fût,
**caractérisée en ce que** lesdites pièces de fixation sont assemblées par au moins un lien souple (20a, 20b) fixé de façon irréversible à chaque pièce de fixation.

2. Bande selon la revendication 1,
**caractérisée en ce que** l'au moins un lien souple (20a, 20b) est fixé par collage ou soudage.

3. Bande selon la revendication 1 ou 2,
**caractérisée en ce que** ledit au moins un lien souple (20a, 20b) est fixé à la tête (32, 132) de chaque pièce de fixation (30a, 30b, 30c, 130a, 130b, 130c).

4. Bande selon la revendication 3,
**caractérisée en ce que** ledit au moins un lien souple (20a, 20b) est fixé sur la face de la tête (32, 132) à l'opposé du fût (31).

5. Bande selon l'une des revendications précédentes,
**caractérisée en ce qu'**elle comporte deux liens souples (20a, 20b) sensiblement parallèles.

6. Bande selon la revendication 5,
**caractérisée en ce que** lesdits deux liens souples (20a, 20b) sont fixés de part et d'autre d'un axe (X-X) dudit fût (31).

7. Bande (100) selon l'une des revendications 1 à 4,
**caractérisée en ce qu'**elle comporte un seul lien souple (20c).

8. Bande (100) selon l'une des revendications précédentes,
**caractérisée en ce que** la matière dudit au moins un lien souple (20a, 20b, 20c) est de même nature que celle de chaque pièce de fixation (30a, 30b, 30c, 130a, 130b, 130c), notamment un polymère thermoplastique, et **en ce qu'**ils sont fixés par soudage.

9. Bande selon la revendication 8,
**caractérisée en ce que** chaque pièce de fixation (30a, 30b, 30c, 130a, 130b, 130c) et ledit au moins un lien souple (20a, 20b, 20c) sont constitués de la même matière.

10. Bande (100) selon l'une des revendications précédentes,
**caractérisée en ce que** la tête (132) de chaque pièce de fixation (130a, 130b, 130c) a une forme sensiblement oblongue, allongée selon une direction d'allongement, et **en ce que** les directions d'allongement de chaque tête sont sensiblement parallèles.

11. Bande selon l'une des revendications précédentes,
**caractérisée en ce que** les pièces de fixation (30a, 30b, 30c, 130a, 130b, 130c) sont réparties de façon sensiblement équidistante sur ladite bande (10, 100).

12. Procédé de fabrication d'une bande (10, 100) de pièces de fixation selon l'une des revendications 1 à 11,
**caractérisé en ce qu'il** comporte l'étape suivante :
- assembler de façon irréversible chaque pièce de fixation (30a, 30b, 30c, 130a, 130b, 130c) à au moins un lien souple (20a, 20b, 20c).

13. Procédé de pose de pièces de fixation présentées en une bande selon l'une des revendications 1 à 11,
**caractérisé en ce qu'il** comporte les étapes suivantes :
- introduire la bande (10, 100) de pièces de fixation dans le magasin d'une machine de pose,
- sélectionner une pièce de fixation (30a, 30b, 30c, 130a, 130b, 130c) prise dans ladite bande,
- sectionner ledit au moins un lien souple (20a, 20b, 20c) reliant ladite pièce de fixation à une pièce de fixation adjacente de ladite bande.
